# EUROPEAN PATENT SPECIFICATION

(11) **EP 2 508 163 B1**
(45) Date of publication and mention of the grant of the patent: **20.11.2013**
(21) Application number: 11161153.9
(22) Date of filing: 05.04.2011
(51) Int. Cl.: A61J 7/00, G07F 11/62

(54) **Automated storage rack and storage product carrier with access control**
Automatisiertes Lagerregal und Lagerproduktträger mit Zugangssteuerung
Magasin de stockage automatique et plateau de support de produits avec contrôle d'accès

(43) Date of publication of application: 10.10.2012
(73) Proprietor: HÄNEL & CO., 9450 Altstätten SG (CH)
(72) Inventor: Krawczyk, Dariusz, 31-450 Krakow (PL)
(74) Representative: Preissner, Nicolaus

(56) References cited:
- EP-A2- 1 598 748
- WO-A1-2004/014189
- WO-A1-2009/124878
- WO-A2-99/60982
- WO-A2-2007/029236
- US-A1- 2009 108 016

## Description

The invention relates to a storage product carrier for a storage rack comprising a plurality of carrier supports spaced one above the other, arranged in pairs on opposite side walls of the storage rack and able to support the storage product carrier which is conveyable by means of an automatic storage/retrieval device and an access opening for accessing the storage product carriers, wherein the storage product carrier is provided with a multitude of compartments having openings.

Such storage product carriers are widely in use in storage racks also known as storage lifts. In such lifts, many storage product carriers are stored, often arranged one above the other in storage towers. The plurality of carrier supports allows to store the product carriers using just as much room as needed. To that end, the height of the stored goods in the storage product carriers is measured before storage. In function of the measured height, storage room is allocated to each storage product carrier.

As the storage product carriers often are quite large - two or more meters in depth and 5 m in width are not rare - they are often divided into compartments, each of which provides space for storage products. As an example, each compartment may hold a quantity of a different type of screw.

WO 2004/014189 A1 discloses a storage product carrier according to the preamble of claim 1. In this carrier, the access to a set of compartments is controlled and a light is switched ON to indicate to the user where to pick the article he has ordered.

WO 2009/124878 A1 discloses an automated storage rack according to the preamble of claim 11. In this system, the access to any article of a given product carrier is not restricted.

If a user of the storage product carrier picks item from the compartments and, in the process, erroneously picks the wrong items, there may be dire consequences.

In one example case, parts for machinery which are not correct and which break the machinery later on can be chosen. Another example are parts that are similar and thus stored next to each other but have a large difference in price. If the wrong part is picked, either customer dissatisfaction or monetary loss ensues. Picking the wrong medication may even lead to death.

The invention is based on the **problem** of providing a storage product carrier of the kind mentioned above which allows improved access control. Furthermore, an automated storage rack providing increased access control is to be provided.

As a **solution** it is proposed to provide the storage product carrier of claim 1 and the automated storage rack of claim 11.

The proposed storage product carrier will only allow access to certain compartments if it is being controlled to do so, for example when an authorized user wishes to access one of the covered compartments.

The closing means is provided with an indicator. As has been said above, the storage product carriers may be very large, so that finding the compartment which has just been opened may be difficult for the user. By providing an indicator, in particular a visual indicator, the user can recognize in an instant which compartments he may open. The indicator may also be useful in assisted picking.

The storage product carrier may comprise a control and interface device for controlling locking devices. This simplifies the connection means because it is no longer necessary to provide a connection means for each locking device. All control signals may be directed at the control and interface device which then is responsible for controlling the locking devices, indicators and detectors.

Further developments in line with claim 1 are referred to in claims 2 to 10.

Each of the closing means may comprise a locking device that can be locked independently from the other devices. That way, each of the compartments can have different access profiles.

One closing means may be provided for each compartment. That way, access control is provided for all compartments and each of the compartments is separately accessible.

The locking device may be configured to be controlled remotely. Users' access rights may thus be stored in a central component, for example a control device of the storage rack.

In another embodiment, the locking device comprises a magnetic and/or a mechanical lock. These types of locks offer secure locking as well as fast unlocking capabilities.

The closing means may comprise an inspection opening. This way, the user may, without opening the compartment or even possessing access rights to do so, determine whether the compartment is filled or not.

The closing means may comprise a handle section which makes it easier for the user to open the closing means once it is unlocked.

The compartment and/or the closing means may comprise a detector for detecting a position of the closing means. That way, a user may receive information about closing means which have not been closed correctly. Since the function of most locking devices depends on the closing means being properly closed, the main cause of failure of the locking device to lock the closing means in the opening is detected.

The storage product carrier may comprise connection means for connecting a current supply. The connection means may be partly or entirely wireless.

The automated storage rack according to the invention allows to define access rights for the compartments and not only for entire carriers.

The automated storage rack may comprise a computing device which in turn comprises an input means, an output means, an interface for interfacing with a storage product carrier and a stored parts memory associating compartments with stored parts and access rights.

The invention will be explained in the following in more detail with reference to an exemplary embodiment schematically shown in the accompanying drawings, wherein:
- Fig. 1: is a top view of a storage product carrier according to the invention;
- Fig. 2a: is a cross-section along the line A-A in Fig. 1 of an embodiment with a magnetic lock;
- Fig. 2b: is a cross-section along the line A-A in Fig. 1 of an embodiment with an electromagnetic lock;
- Fig. 3: is a view of an automated storage rack according to the invention;
- Fig. 4: is an internal view of an automated storage rack as in Fig. 3;
- Fig. 5: is a view of a base section of a storage product carrier according to the invention and
- Fig. 6: is a functional schematic of an automated storage rack and a storage product carrier according to the invention.

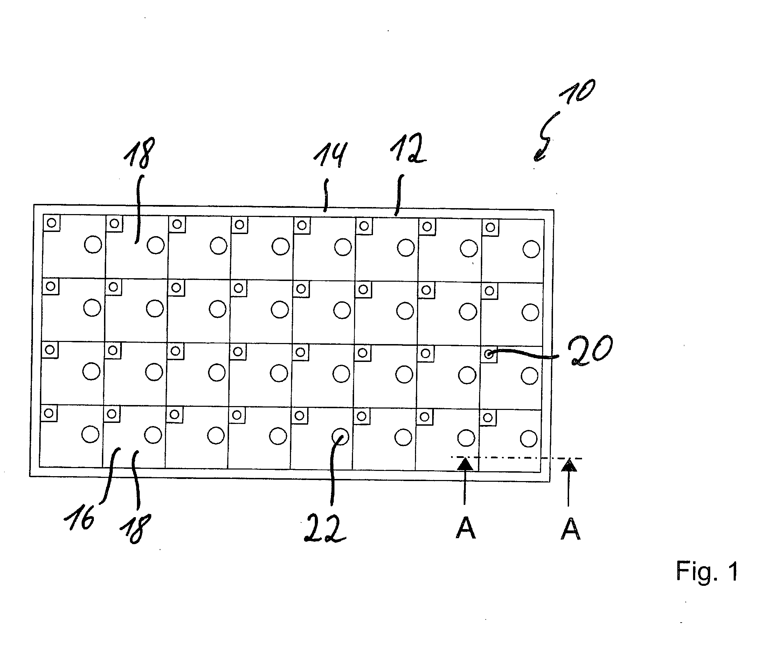

A storage product carrier 10 as shown in Fig. 1 has a base portion 12 of which only a border 14 is visible in the drawing. A plurality of compartments 16 is arranged in a rectangular pattern.

Each of the compartments 16 is covered by a closing means, in this embodiment a lid 18. Each of the lids 18 has an indicator in the form of an LED 20 which will light up when the lid 18 is unlocked.

Furthermore, the lid 18 has an opening 22 which at the same time serves as an inspection opening and a handle section. The opening 22 allows the user to visually inspect the contents of the compartments 16. When the lid 18 is unlocked, the user may put a finger through the opening 22 and use it as a handle to pull up the lid 18.

If storage goods which are to be stored in the compartment 16 are small enough to be removed from the compartment 16 through the opening 22, the opening 22 can be covered by a window and a separate handle for opening the lid 18 may be provided.

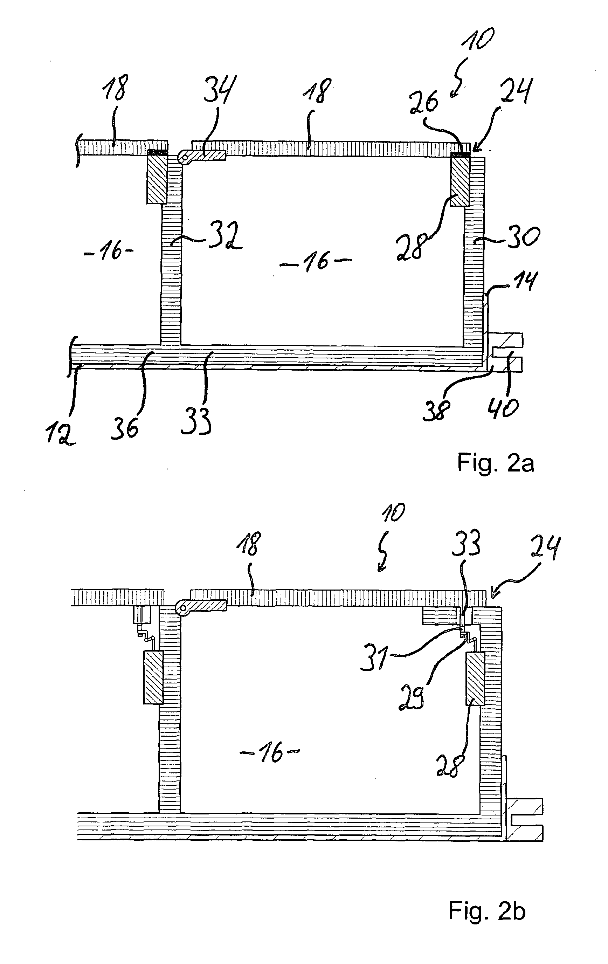

As shown in Fig. 2a, the compartments 16 are formed by a main body 36 and are bordered by walls 30, 32 and a floor 36.

The compartment 16 and the lid 18 comprise a magnetic locking means 24. The magnetic locking means 24 comprises a ferromagnetic metal tablet 26 which is affixed solidly to the closing means 18. Furthermore, the magnetic locking means 24 comprises a solenoid 28 affixed solidly to the wall 30 of the compartment 16. The solenoid 28 is wound around a core (not shown) that comprises a permanent magnet. Thus, if the solenoid 28 does not receive any energy, the permanent magnet contained within will hold the magnetic metal tablet 26 firmly in place and, in this way, will lock the lid 18.

When the solenoid 28 receives electric power, it will counter the magnetic field of the permanent magnet contained within in such a way that the metal tablet 26 may be removed from the solenoid 28. In this way, the lid 18 is unlocked. This kind of lock has no moving parts and is almost maintenance-free. The current through the solenoid 28 must be in the right direction for the magnetic field caused by it to counter the magnetic field of the permanent magnet.

However, if the goods to be stored in the compartment 16 are sensitive to magnetic fields, a different solution may be required which is shown in Fig. 2b. It is possible to build a locking means 24 which also has a mechanical locking component. One example would be a hook 29 which is hooked into an opening 31 of a leg 33 of the lid 18 and which can be withdrawn by the solenoid 28.The solution would only require very low-strength magnetic fields.

Further choices for locking means 24 may be envisaged by a person skilled in the art and the locking means 24 are not restricted to the types described above.

As can further be seen in Fig. 2, the lid 18 is connected to the wall 32 by a hinge 34. The hinge 34 holds the lid 18 in place, so that it can be opened and closed easily. Furthermore, the hinge 34 contains a position detector (not shown) which is capable of emitting a signal when the lid 18 is not fully closed.

The main body 36 is laid into the base portion 12 and is surrounded at least partly by the border 14. The base portion 12 has a support rail 38 with a groove 40 into which carrier supports of a storage rack may be inserted.

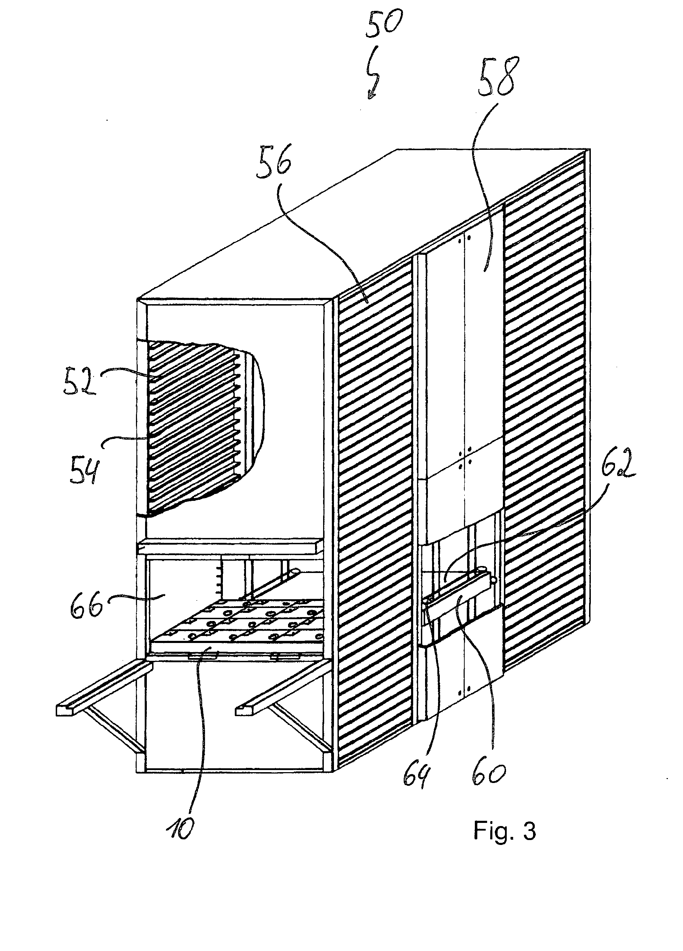

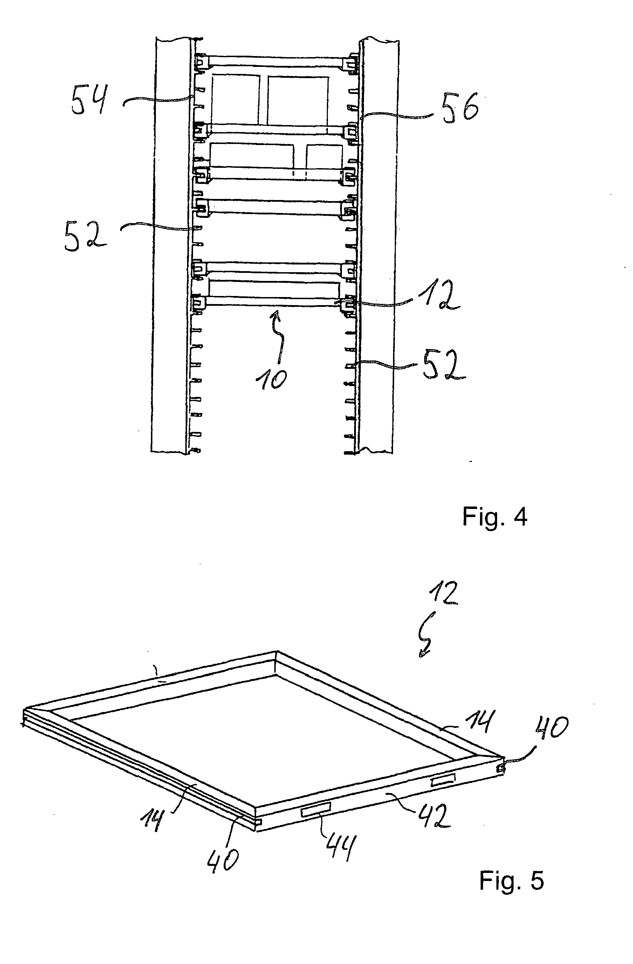

A storage rack 50 suitable for accepting the storage product carrier 10 is shown in Figs. 3 and 4. Carrier supports 52 are arranged on side walls 54, 56 of the storage rack 50. A lift compartment 58 contains an automatic storage/retrieval device, in this case a lift 60 with a platform 62 and a handling device 64 for drawing the storage product carrier 10 onto the platform 62 and for pushing it either into an access opening 66 or onto a pair of carrier supports 52.

The base portion 12 without the main body 36 and the lids 18 is shown in Fig. 5. A front portion 42 of the base portion 12 has recesses or openings 44 which allow for the handling device 64 to grip the base portion 12 and thus draw it out from the carrier supports inserted into the grooves 40.

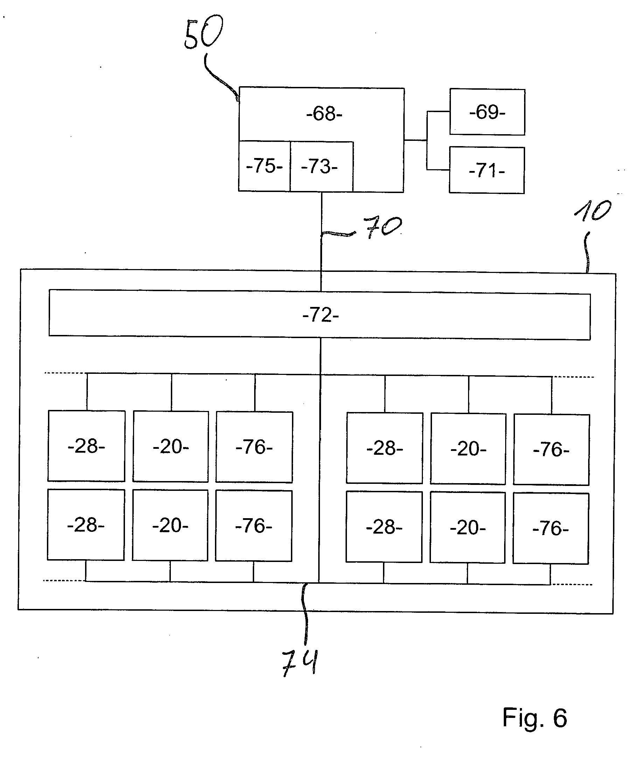

As is shown in the signal schematic in Fig. 6, the storage rack 50 comprises a control unit 68 which, among other tasks, keeps track of all the goods deposited in storage product carriers 10, especially which compartment 16 on which storage product carrier 10 the goods were deposited in. Furthermore, the control unit 68 grants access to the storage rack 50 and the storage product carriers 10 based on identification given by a user. If the user does not have access rights to a certain storage product carrier 10, that storage product carrier 10 will not be moved into the access opening 66 by the lift 60 and handling device 64.

To interface with the user, the control unit 68 has an input means, in this case a keyboard 69, and output means, in this case a monitor 71. Further input and/or output means may be provided, for example RFID identification for users.

To that end, the control unit 68 comprises a stored parts memory 75 which also holds a list of goods and an identification of compartments 16 these goods are stored in. Also, access control information for the compartments 16 is stored in the stored parts memory 75.

Once the user has requested a storage product carrier 10 he has access to, the storage product carrier 10 will be moved into the access opening 66. The storage product carrier 10 is connected to an interface 73 of the control unit 68 by the connection means 70 which in this embodiment is an infrared communication unit. Mechanical spring contacts are provided to the storage product carrier 10 for power supply (not shown).

The control unit 68 then establishes a connection to a control and interface device 72 of the storage product carrier 10. Once the connection has been established, the control unit 68 transmits to the control and interface device 72 the identification of all compartments 16 that the user shall be allowed to open.

The control interface device 72 emits signals on and receives signals from a signal bus 74. The LEDs 20, the solenoid 28 and detectors 76 of all the compartments 16 have interfaces connected to the signal bus 74. By this connection, it is possible for the control interface device 72 to command the solenoid 28, the LEDs 20 and to read out the detectors 76.

Once the control interface device 72 has received the identification of the compartments 16 that are to be unlocked, it sends a command to the solenoids 28 of the selected compartments 16 to unlock. Furthermore, the control interface device 72 sends a command to the appropriate LEDs 20 to turn themselves on so as to indicate the compartments 16 that may be opened by the user. Of course, it may be possible that only one compartment 16 may be opened by the user.

When one of the compartments 16 is opened by the user, the detectors 76 send a signal to the control interface device 72 which in turn transmits the signal to the control unit 68. The control unit 68 may or may not supervise the opening and closing of compartments 16. One example where supervision may be useful is the automatic updating of a number of parts stored in the compartments 16.

Once the user has finished picking from the storage product carrier 10, he will command the control unit 68 to move the storage product carrier 10 back into storage. When this happens, the control and interface device 72 will verify that all the detectors 76 report that their associated lid 18 has been closed. If this is not the case, the control and interface device 72 will transmit a message to the control unit 68 which will in turn display an information message on the monitor 71. Furthermore, the control interface device will command the LEDs 20 of the compartments 16 the lids 18 of which are not properly closed to flash. Once all the lids 18 have been properly closed, the control unit 68 will command the lift 60 and handling device 64 to move the storage product carrier 10 back into storage space.

Although the compartments 16 shown in Fig. 1 are all square and of the same size, the compartments 16 can be of any shape, for example rectangular or hexagonal. It is not necessary for all the compartments 16 to be covered by a lid 18.

The storage product carrier and the automated storage rack proposed herein allow for easy and secure access control to compartments 16.

### List of reference signs

- 10: storage product carrier
- 12: base portion
- 14: border
- 16: compartment
- 18: lid (closing means)
- 20: LED (indicator)
- 22: opening (inspection opening, handle section)
- 24: locking means
- 26: ferromagnetic metal tablet
- 28: solenoid
- 29: hook
- 30: wall
- 31: opening
- 32: wall
- 33: leg
- 33: floor
- 34: hinge
- 36: main body
- 38: support rail
- 40: groove
- 42: front portion
- 44: opening
- 50: storage rack
- 52: carrier support
- 54: side wall
- 56: side wall
- 58: lift compartment
- 60: lift
- 62: platform
- 64: handling device
- 66: access opening
- 68: control unit
- 69: keyboard (input means)
- 70: connection means
- 71: monitor (output means)
- 72: control and interface device
- 73: interface
- 74: signal bus
- 75: stored parts memory
- 76: detector

## Claims

1. A storage product carrier (10) for
a storage rack (50)
comprising a plurality of carrier supports (52) spaced one above the other, arranged in pairs on opposite side walls (54) of the storage rack (50) and able to support the storage product carrier (10) which is conveyable by means of an automatic storage/retrieval device and an access opening (66) for accessing the storage product carriers (10),
wherein the storage product carrier (10) is provided with a multitude of compartments (16) having openings, wherein closing means (18) with indicators (20) are provided to cover at least one of the openings, wherein a locking means (24) is provided to lock the closing means (18) in the openings and wherein the locking means (24) can be controlled to lock the closing means (18) in the opening or to allow the closing means (18) to be moved such that the opening becomes accessible, **characterized in that** the storage product carrier (10) comprises partly or entirely wireless connection means (70) for connecting a signal transmission device, **in that** the storage product carrier (10) comprises a control and interface device (72) for controlling the locking means (24), wherein the control and interface device (72) and the indicators (20) are connected to a signal bus (74).

2. Storage product carrier according to claim 1, **characterized in that** each of the closing means (18) comprises a locking means (24) that can be locked independently from other locking means (24).

3. Storage product carrier according to any of the preceding claims **characterized in that** one closing means (18) is provided for each compartment (16).

4. Storage product carrier according to any of the preceding claims, **characterized in that** the locking means (24) is configured to be controlled remotely.

5. Storage product carrier according to any of the preceding claims, **characterized in that** the locking means (24) comprises a magnetic and/or a mechanical lock.

6. Storage product carrier according to any of the preceding claims, **characterized in that** the closing means (18) comprises an inspection opening (22).

7. Storage product carrier according to any of the preceding claims, **characterized in that** the closing means (18) comprises a handle section (22).

8. Storage product carrier according to any of the preceding claims, **characterized in that** the compartment (16) and/or the closing means (18) comprises a detector for detecting a position of the closing means (18).

9. Storage product carrier according to any of the preceding claims, **characterized in that** the storage product carrier (10) comprises connection means (70) for connecting a current supply.

10. Storage product carrier according to claim 9, **characterized in that** the wireless connection means (70) comprise infrared connection means.

11. Automated storage rack (50) comprising carrier supports (52) arranged on side walls (54, 56) of the storage rack (50), wherein a lift compartment (58) contains an automatic storage/retrieval device (60) with a platform (62) and a handling device (64) for drawing a storage carrier (10) onto the platform (62) and for pushing the storage carrier (10) either into an access opening (66) or onto a pair of carrier supports (52), **characterized in that** the storage product carrier (10) is provided with a multitude of compartments (16) having openings, wherein closing means (18) are provided to cover at least one of the openings, wherein a locking means (24) is provided to lock the closing means (18) in the openings and wherein the locking means (24) can be controlled to lock the closing means (18) in the opening or to allow the closing means (18) to be moved such that the opening becomes accessible, wherein the storage product carrier (10) comprises partly or entirely wireless connection means (70) for connecting a signal transmission device and wherein the closing means (18) comprises an indicator (20).

12. Automated storage rack according to claim 11, **characterized by** a computing device which comprises an input means (69), an output means (71), an interface (73) for interfacing with the storage product carrier (10) and a stored parts memory (75) associating compartments with stored parts and access rights.

13. Automated storage rack according to claim 11 or 12, **characterized by** a storage product carrier (10) according to any of the claims 1 to 10.

## Patentansprüche

1. Lagergutträger (10) für ein
Lagerregal (50),
das eine Vielzahl von übereinander angeordneten Trägerstützen (52), die paarweise an einander gegenüberliegenden Seitenwänden (54) des Lagerregals (50) angeordnet sind und den Lagergutträger (10), der mittels einer automatischen Einlagerungs- und Entnahmevorrichtung förderbar ist, abstützen können,
und eine Zugangsöffnung (66) zum Zugreifen auf die Lagergutträger (10) aufweist,
wobei der Lagergutträger (10) mit einer Mehrzahl von Fächern (16) ausgestattet ist, die Öffnungen aufweisen, wobei ein Verschlussmittel (18) mit Anzeigeeinrichtungen (20) vorgesehen ist, um wenigstens eine der Öffnungen zu bedecken,
wobei eine Verriegelungseinrichtung (24) zum Verriegeln des Verschlussmittels (18) in der Öffnung vorgesehen ist und wobei die Verriegelungseinrichtung (24) derart steuerbar ist, dass das Verschlussmittel (18) in der Öffnung verriegelt ist oder dass dem Verschlussmittel (18) eine Bewegung derart erlaubt ist, dass die Öffnung zugänglich wird,
**dadurch gekennzeichnet, dass**
der Lagergutträger (10) ein teilweise oder vollständig drahtloses Verbindungsmittel (70) zum Anschluss einer Signalübertragungseinrichtung aufweist,
dass der Lagergutträger (10) eine Steuerungs- und Schnittstelleneinrichtung (72) zur Steuerung der Verriegelungseinrichtung (24) aufweist,
wobei die Steuerungs- und Schnittstelleneinrichtung (72) und die Anzeigeeinrichtung (20) mit einem Signalbus (74) verbunden sind

2. Lagergutträger gemäß Anspruch 1, **dadurch gekennzeichnet, dass** jedes der Verschlussmittel (18) eine Verriegelungseinrichtung (24) aufweist, die unabhängig von anderen Verriegelungseinrichtungen (24) verriegelbar ist.

3. Lagergutträger gemäß einem der voranstehenden Ansprüche, **dadurch gekennzeichnet, dass** für jedes Fach (16) ein Verschlussmittel (18) vorgesehen ist.

4. Lagergutträger gemäß einem der voranstehenden Ansprüche, **dadurch gekennzeichnet, dass** die Verriegelungseinrichtung (24) fernsteuerbar eingerichtet ist.

5. Lagergutträger gemäß einem der voranstehenden Ansprüche, **dadurch gekennzeichnet, dass** die Verriegelungseinrichtung (24) ein magnetisches und/oder ein mechanisches Schloss aufweist.

6. Lagergutträger gemäß einem der voranstehenden Ansprüche, **dadurch gekennzeichnet, dass** das Verschlussmittel (18) eine Inspektionsöffnung (22) aufweist.

7. Lagergutträger gemäß einem der voranstehenden Ansprüche, **dadurch gekennzeichnet, dass** das Verschlussmittel (18) einen Griffabschnitt (22) aufweist.

8. Lagergutträger gemäß einem der voranstehenden Ansprüche, **dadurch gekennzeichnet, dass** das Fach (16) und/oder das Verschlussmittel (18) einen Detektor zum Detektieren einer Position des Verschlussmittels (18) aufweist.

9. Lagergutträger gemäß einem der voranstehenden Ansprüche, **dadurch gekennzeichnet, dass** der Lagergutträger (10) ein Verbindungsmittel (70) zur Verbindung einer Stromversorgung aufweist.

10. Lagergutträger gemäß Anspruch 9, **dadurch gekennzeichnet, dass** das drahtlose Verbindungsmittel (70) ein Infrarot-Verbindungsmittel umfasst.

11. Automatisiertes Lagerregal (50), umfassend Trägerstützen (52), die an Seitenwänden (54,56) des Lagerregals (50) angeordnet sind, wobei ein Aufzugsschacht (58) eine automatische Einlagerungs- und Entnahmevorrichtung mit einer Plattform (62) und einem Bediengerät (64) zum Ziehen des Lagergutträgers (10) auf die Plattform (62) und zum Schieben des Lagergutträgers (10) entweder in eine Zugangsöffnung (66) oder auf ein Paar von Trägerstützen (52),
**dadurch gekennzeichnet, dass**
der Lagergutträger (10) eine Vielzahl von Fächern (16) mit Öffnungen aufweist, wobei ein Verschlussmittel (18) zum Bedecken wenigstens einer der Öffnungen vorgesehen ist, wobei eine Verriegelungseinrichtung (24) zum Verriegeln des Verschlussmittels (18) in der Öffnung vorgesehen ist und wobei die Verriegelungseinrichtung (24) derart steuerbar ist, dass das Verschlussmittel (18) in der Öffnung verriegelt ist oder dass dem Verschlussmittel (18) eine Bewegung derart erlaubt ist, dass die Öffnung zugänglich wird, wobei der Lagergutträger (10) ein teilweise oder vollständig drahtloses Verbindungsmittel (70) zum Anschluss einer Signalübertragungseinrichtung aufweist und wobei das Verschlussmittel (18) eine Anzeigeeinrichtung (20) aufweist.

12. Automatisiertes Lagerregal gemäß Anspruch 11, **gekennzeichnet durch** eine Rechnereinrichtung, die eine Eingabeeinrichtung (69), eine Ausgabeeinrichtung (71), eine Schnittstelle (73) zum Koppeln an den Lagergutträger (10) und einen Lagergutspeicher (75) zur Zuordnung von Fächern (16) zu Lagergütern und Zugriffsrechten aufweist.

13. Automatisches Lagerregal gemäß einem der Ansprüche 11 oder 12, **gekennzeichnet durch** einen Lagergutträger (10) gemäß einem der Ansprüche 1 bis 10.

## Revendications

1. Porteur de produit en stockage (10) pour
un magasin de stockage (50)
comprenant une pluralité de supports porteurs (52) espacés les uns au-dessus des autres, agencés par paires sur des parois latérales opposées (54) du magasin de stockage (50) et capables de supporter le porteur de produit en stockage (10) qui peut être convoyé au moyen d'un dispositif automatique de stockage/récupération
et une ouverture d'accès (66) pour accéder aux porteurs de produits en stockage (10),
dans lequel le porteur de produit en stockage (10) est pourvu d'une multitude de compartiments (16) ayant des ouvertures, dans lequel des moyens de fermeture (18) avec des indicateurs (20) sont prévus pour couvrir l'une au moins des ouvertures, dans lequel un moyen de blocage (24) est prévu pour bloquer les moyens de fermeture (18) dans les ouvertures et dans lequel le moyen de blocage (24) peut être commandé pour bloquer les moyens de fermeture (18) dans l'ouverture ou pour permettre aux moyens de fermeture (18) d'être déplacés de telle façon que l'ouverture devient accessible,
**caractérisé en ce que** le porteur de produit en stockage (10) comprend des moyens de connexion (70) partiellement ou entièrement sans fil pour connecter un dispositif de transmission de signaux, **en ce que** le porteur de produit en stockage (10) comprend un dispositif de commande et d'interface (72) pour commander le moyen de blocage (24), dans lequel le dispositif de commande et d'interface (72) et les indicateurs (20) sont connectés à un bus de signaux (74).

2. Porteur de produit en stockage selon la revendication 1, **caractérisé en ce que** chacun des moyens de fermeture (18) comprend un moyen de blocage (24) qui peut être bloqué indépendamment d'autres moyens de blocage (24).

3. Porteur de produit en stockage selon l'une quelconque des revendications précédentes, **caractérisé en ce qu'**un moyen de fermeture (18) est prévu pour chaque compartiment (16).

4. Porteur de produit en stockage selon l'une quelconque des revendications précédentes, **caractérisé en ce que** le moyen de blocage (24) est configuré pour être commandé à distance.

5. Porteur de produit en stockage selon l'une quelconque des revendications précédentes, **caractérisé en ce que** les moyens de blocage (24) comprennent un verrou magnétique et/ou un verrou mécanique.

6. Porteur de produit en stockage selon l'une quelconque des revendications précédentes, **caractérisé en ce que** les moyens de fermeture (18) comprennent une ouverture d'inspection (22).

7. Porteur de produit en stockage selon l'une quelconque des revendications précédentes, **caractérisé en ce que** les moyens de fermeture (18) comprennent une portion en poignée (22).

8. Porteur de produit en stockage selon l'une quelconque des revendications précédentes, **caractérisé en ce que** le compartiment (16) et/ou les moyens de fermeture (18) comprennent un détecteur pour détecter une position des moyens de fermeture (18).

9. Porteur de produit en stockage selon l'une quelconque des revendications précédentes, **caractérisé en ce que** le porteur de produit en stockage (10) comprend des moyens de connexion (70) pour connecter une alimentation de courant.

10. Porteur de produit en stockage selon la revendication 9, **caractérisé en ce que** les moyens de connexion sans fil (70) comprennent des moyens de connexion à infrarouge.

11. Magasin de stockage automatisé (50) comprenant des supports porteurs (52) agencés sur des parois latérales (54, 56) du magasin de stockage (50), dans lequel un compartiment élévateur (58) contient un dispositif de stockage/récupération automatique (60) avec une plate-forme (62) et un dispositif de manutention (64) pour tirer un porteur de stockage (10) jusque sur la plate-forme (62) et pour pousser le porteur de stockage (10) soit dans une ouverture d'accès (66) soit jusque sur une paire de supports porteurs (52), **caractérisé en ce que** le porteur de produit en stockage (10) est pourvu d'une multitude de compartiments (16) ayant des ouvertures, dans lequel des moyens de fermeture (18) sont prévus pour couvrir l'une au moins des ouvertures, dans lequel un moyen de blocage (24) est prévu pour bloquer les moyens de fermeture (18) dans les ouvertures et dans lequel le moyen de blocage (24) peut être commandé pour bloquer les moyens de fermeture (18) dans l'ouverture ou pour permettre aux moyens de fermeture (18) d'être déplacés de telle façon que l'ouverture devient accessible, dans lequel le porteur de produit en stockage (10) comprend des moyens de connexion partiellement ou entièrement sans fil (70) pour connecter un dispositif de transmission de signaux, et dans lequel les moyens de fermeture (18) comprennent un indicateur (20).

12. Magasin de stockage automatisé selon la revendication 11, **caractérisé par** un dispositif de calcul qui comprend un moyen d'entrée (69), un moyen de sortie (71), une interface (73) pour assurer une interface avec le porteur de produit en stockage (10) et une mémoire de pièces stockées (75) qui associe des compartiments avec des pièces stockées et des droits d'accès.

13. Magasin de stockage automatisé selon la revendication 11 ou 12, **caractérisé par** un porteur de produit en stockage (10) selon l'une quelconque des revendications 1 à 10.
